Europäisches Patentamt

European Patent Office

Office européen des brevets

(19)

(11) Veröffentlichungsnummer: **0 327 506**

**A1**

(12) # EUROPÄISCHE PATENTANMELDUNG

(21) Anmeldenummer: 89810080.5

(22) Anmeldetag: 31.01.89

(51) Int. Cl.⁴: **F 16 B 7/04**
// F16B41/00, F16B35/04

(30) Priorität: 02.02.88 CH 352/88

(43) Veröffentlichungstag der Anmeldung:
09.08.89 Patentblatt 89/32

(84) Benannte Vertragsstaaten: **AT BE DE GB NL**

(71) Anmelder: **Fehlbaum & Co.**
**Käppeligasse 22**
**CH-4125 Riehen (CH)**

(72) Erfinder: **Korth, Bernd**
**Bühlstrasse 54**
**D-7858 Weil am Rhein (DE)**

(74) Vertreter: **Gehrig, Peter et al**
**A. Braun, Braun, Héritier, Eschmann AG Holbeinstrasse**
**36-38**
**CH-4051 Basel (CH)**

(54) **Anordnung zur Verlängerung von Rohrsäulen, insbesondere mit quadratischem und rundem Rohrquerschnitt.**

(57) Die Anordnung zur Verlängerung von Rohrsäulen mit quadratischem oder runden Rohrquerschnitt enthält eine zwischen einer Stammsäule (1) und einem Verlängerungselement (6) angeordnete und in der Stammsäule (1) verankerte Klemmvorrichtung (2). Diese enthält vier längliche Spannbolzen (3), die sich je etwa zur Hälfte ihrer Länge in der Stammsäule (1) und im Verlängerungselement (6) erstrecken. Die Spannbolzen (3) sind an einem nächst einem Ende der Stammsäule (1) verankerten Spannblock (4) in Längsrichtung gelagert. Der Spannblock aus zwei symmetrischen Hälften ist mittels einer Spannschraube spreizbar, wodurch die Spannbolzen (3) an die Innenwände der Stammsäule (1) und des Verlängerungselementes (6) angepresst werden. Die beiden so zu koppelnden Bauteile (1, 6) werden durch die Andruckkraft der Spannbolzen (3) sowohl genau aufeinander ausgerichtet, als auch gegenseitig miteinander verbunden.

Fig.1b

## Beschreibung

## Anordnung zur Verlängerung von Rohrsäulen, insbesondere mit quadratischem und rundem Rohrquerschnitt

Die Erfindung bezieht sich auf eine Anordnung zur Verlängerung von Rohrsäulen, insbesondere mit quadratischem und rundem Rohrquerschnitt, nach dem Oberbegriff des Patentanspruchs 1.

Es ist bekannt, an Polygon-oder Rundrohr-Säulen demontierbare Verlängerungselemente des gleichen Querschnitts so anzubringen, dass das Verlängerungselement mittels Laschenverbindern oder Steckzapfen an die Stammsäule angeschlossen ist. Rundrohrsäulen können auch mit Muffenverbindern verlängert werden. Bei Polygonsäulen ist es in der Regel notwendig, dass Kanten und Flächen der verschiedenen Säulenabschnitte genau aufeinander passen, um ein gutes optisches Aussehen oder miteinander übereinstimmende Anschlussflächen zu erzielen. Sofern Rundrohrsäulen und zugehörige Verlängerungselemente mit aufeinander fluchtenden Befestigungsmitteln zusammenzubringen sind, wird Drehausrichtbarkeit und Lagefixierbarkeit gefordert, sodass beispielsweise Schraubmuffen nur in Verbindung mit Fixiergliedern wie Stellschrauben oder Kontermuttern verwendbar sind. Um Polygonprofil-Abschnitte auf einfache Weise deckungsgleich und lösbar miteinander zu verbinden, sind sowohl Laschen- als auch Zapfenverbindungen üblich.

In allen Fällen ist es notwendig, dass die Stossstellen genau aufeinander passen, um eine störungsfreie Montage und Demontage der verlängerten Säule sicherzustellen. Ausserdem ist es notwendig, Schrauben, Muttern, Laschen usw. so beisammen zu haben, dass die Montage ohne Suchen und Nacharbeiten erfolgen kann, und bei der Demontage keine Lagerungsprobleme bei den Haupt-und Zusatzteilen auftreten.

Bei den Polygonrohrsäulen haben sich insbesondere die Säulen mit quadratischem Querschnitt wegen ihrer universellen Anwendungsmöglichkeiten als beliebt erwiesen. Solche Säulen werden häufig mit Längsschlitzen auf zwei einander gegenüberliegenden Seiten, oder auf allen vier Seiten versehen, welche zum Einhängen von Auslegern mit entsprechend geformten Konsolen bestimmt sind. Diese Ausführungsformen eignen sich vorzugsweise für die Erstellung demontierbarer Gestellanordnungen unterschiedlicher Höhe, wobei Kombinationen mit lösbar zu befestigenden Verlängerungselementen bevorzugt sind.

Es ist daher Aufgabe der Erfindung eine Rohrsäulenverlängerungsanordnung der eingangs genannten Art vorzuschlagen, deren Bauteile einfach herstell- und montierbar, anpassungsfähig an Abmessungsdifferenzen im Klemmbereich, und praktisch unverlierbar an einem der beiden miteinander zu verbindenden Säulenabschnitten gehalten sind. Ausserdem soll die Säulenverlängerung so gestaltbar sein, dass keines der Verbindungsteile über die Rohrsäulenoberfläche vorzustehen braucht.

Die Lösung dieser Aufgabe geht aus dem kennzeichnenden Teil des Patentanspruchs 1 hervor. Ausführungsformen davon sind durch die abhängigen Ansprüche definiert.

Ausführungsbeispiele des Erfindungsgegenstandes sind nachfolgend anhand der Zeichnung beschrieben. Darin zeigt:

Fig. 1a, 1b eine erfindungsgemässe Anordnung zur Säulenverlängerung vor dem Ankuppeln des Verlängerungselementes (1a), und im gekuppelten Zustand der Säule und des Verlängerungselementes (1b) im Längsschnitt bzw. in Ansicht in der Ebene 1-1 nach Fig. 2,

Fig. 2, 2a je einen Schnitt in der Ebene II-II nach Fig. 1 an einer quadratischen Rohrsäule in etwa gleichem (Fig. 2) und in grösserem Massstab (Fig. 2) mit mehr Details,

Fig. 3 einen Schnitt in der Ebene III-III nach Fig. 1 an einer Rundrohr-Säule,

Fig. 4 eine Feststellschraube mit einem Handspanngriff, und

Fig. 5 ein Anwendungsbeispiel von quadratischen Rohrsäulen mit Längsschlitzen in Verbindung mit einem kreuzartigen Verbindungs-Endstück.

In dem nachstehend mit Stammsäule 1 bezeichneten Profilabschnitt befindet sich eine Klemmvorrichtung 2, bestehend aus vier in quadratischer Anordnung in das Anschluss-Ende der Stammsäule 1 eingesetzte Spannbolzen 3, einem in Säulenlängsrichtung längsgeteilten Spannblock 4, und einer die Säulenwand durchsetzenden Spannschraube 5, durch die die Klemmvorrichtung 2 im genannten Ende der Stammsäule 1 unverlierbar gehalten ist.

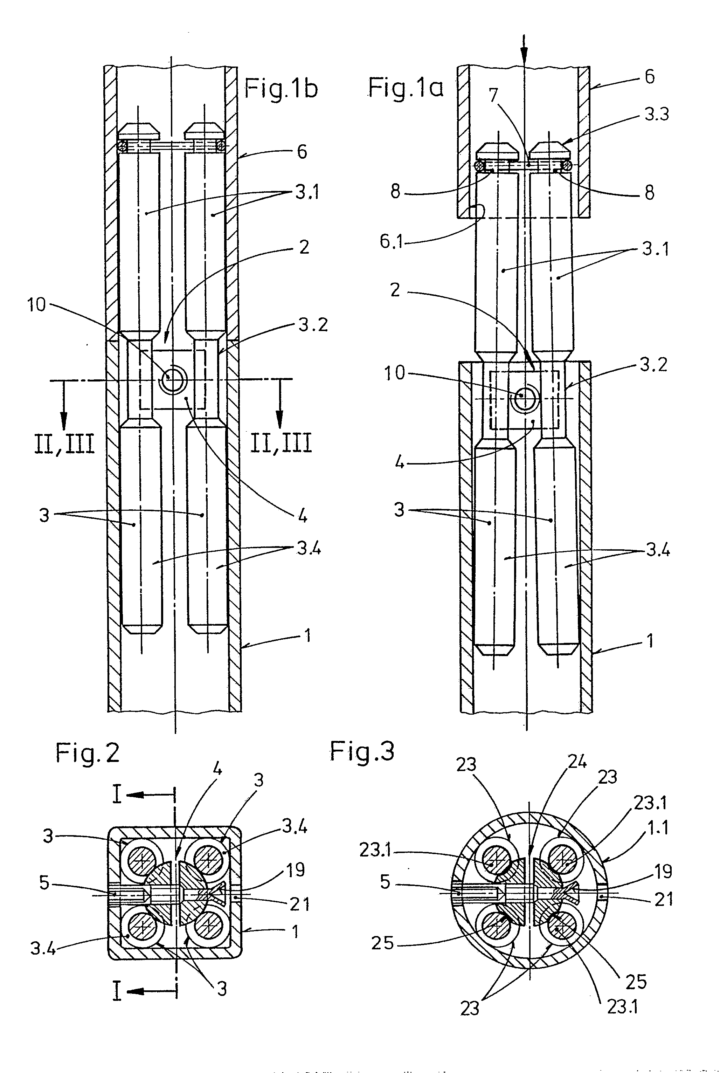

Fig. 1a zeigt die im ungekoppelten Zustand aus der Stammsäule 1 herausragenden obern Abschnitte 3.1 der Spannbolzen 3, die im Bereich eines im Querschnitt reduzierten Fangabschnittes 3.2 mittels des Spannblockes 4 mit Bewegungsspiel gehalten sind. Die Enden der obern Abschnitte 3.1 der Spannbolzen sind mit Einlauf-Fasen 3.3 versehen, die das Finden der Gegenöffnung 6.1 am anzukoppelnden Verlängerungselement 6 erleichtern sollen. Letzteres Element ist in den Fig. 1a, 1b als zur Stammsäule 1 gleichprofiliertes Rohrstück gezeigt, kann aber jede beliebige Form besitzen, sofern sein Anschlussbereich dem Profil der Stammsäule 1 angepasst ist.

Zum verbesserten Finden der Gegenöffnung 6.1 am anzukoppelnden Verlängerungselement 6 dient auch ein O-Ring 7, der in eine Nute 8 im Endbereich der obern Spannbolzenabschnitte 3.1 eingelegt ist und diese federnd zusammenfassend umgibt. Diese Massnahme hat weiterhin eine Vorzentrierung der Spannbolzen 3 in der Stammsäule 1 zur Folge, indem die untern Bolzenabschnitte 3.4 infolge ihrer Abstützung am Spannblock 4 gegen die Innenseite der Stammsäule 1 vorgespannt werden.

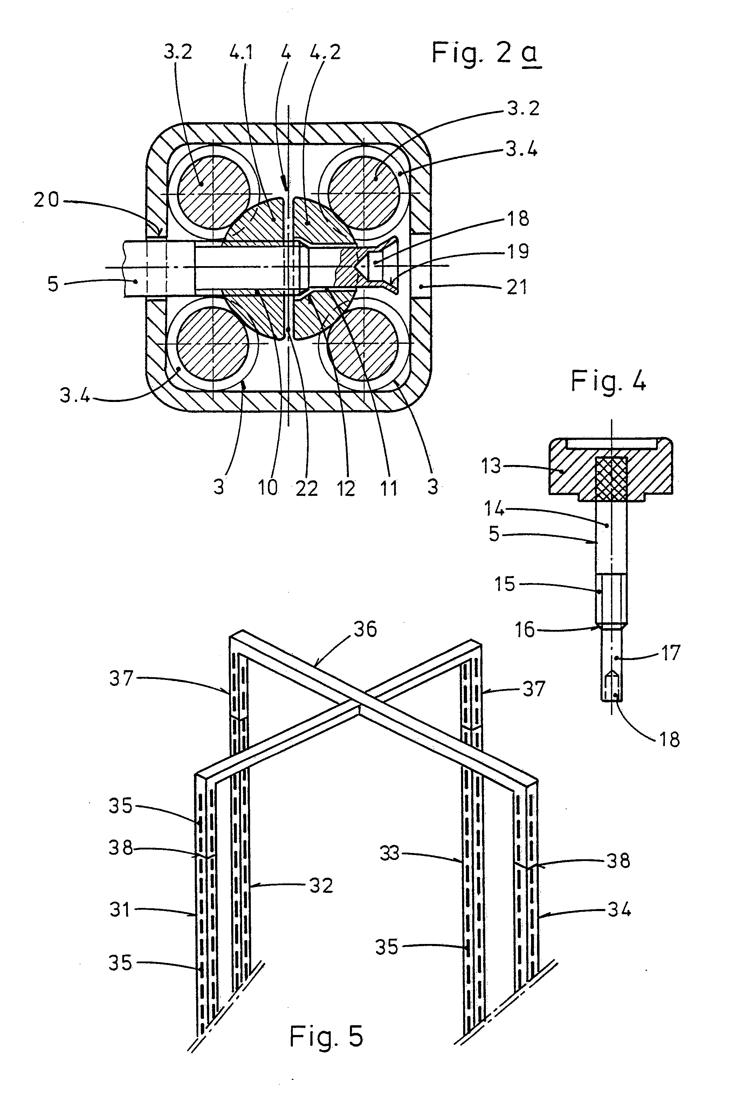

Die Figuren 1b und 2 zeigen die Verlängerungsanordnung in geschlossener Stellung der Stammsäule 1 und des Verlängerungsstückes 6. Die Spannbolzen 3 bzw. die Oberflächen ihrer obern Abschnitte 3.1 und ihrer untern Abschnitte 3.4 befinden sich in engem Kontakt mit den benachbarten Innenflächen der bezüglichen Rohrabschnitte. Hiefür verantwortlich ist die durch die Spannschraube 5 auf den Spannblock 4 ausgeübte Spreizkraft.

Die Grundform des Spannblocks 4 ist gemäss Fig. 2 und 2a ein im wesentlichen zylindrischen Körper, dessen Länge etwas kürzer als der Fangabschnitt 3.2 längsmittig der Spannbolzen 3 ist (Fig. 1a, b). Dieser Körper ist in die zwei etwa gleichgrossen Hälften 4.1, 4.2 unterteilt. Jede Hälfte ist von einer Bohrung durchsetzt, und beide Bohrungen fluchten genau aufeinander. Die Hälfte 4.1 enthält eine Gewindebohrung 10, die Hälfte 4.2 eine Durchgangsbohrung 11 mit einer trennflächenseitigen Druckschulter 12. Die beiden Bohrungen 10, 11 und die Druckschulter 12 sind auf komplementäre Abschnitte der Spannschraube 5 abgestimmt, die in der Ausführungsform nach Fig. 4 in Verbindung mit einem Handgriff 13 einen Schaft 14 mit einem Gewindeabschnitt 15, einen Druckkragen 16 am vordern Gewindeende, und einen Zapfenabschnitt 17 aufweist. Letzterer enthält eine Sacklochbohrung 18, die gemäss Fig. 2, 2a zur Erstellung einer Ausschraubsicherung 19 für die Spannschraube 5 dient.

Beim Einsetzen der Klemmvorrichtung 2 in das Anschluss-Ende der Stammsäule 1 wird letztere so gedreht, dass sich das Schraubendurchtrittsloch 20 in der obern Säulenwand befindet (Fig. 2, 2a um 90° nach rechts drehen). Dann werden die beiden untern Spannbolzen 3 in die Profilecken eingelegt, hierauf die beiden Spannblockhälften in der Reihenfolge 4.2, 4.1 in die Fangabschnitte 3.2 der untern Spannbolzen 3 gesetzt und sodann die obern Spannbolzen 3 so auf die obere Spannblockhälfte 4.1 gelegt, dass diese in die Fangabschnitte 3.2 der obern Spannbolzen eingreift. Nach Zentrieren der Spannblockbohrungen 10, 11 auf das Schraubendurchtrittsloch 20 wird die Schraube 5 eingesetzt und soweit in die Gewindebohrung 10 der obern Spannblockhälfte 4.1 eingedreht, bis ihr Druckkragen 16 an der Druckschulter 12 der untern Spannblockhälfte 4.2 anliegt. Die Klemmvorrichtung 2 ist nun an der Stammsäule 1 verankert und rüttelsicher daran befestigt. Durch Aufspreizen des Oeffnungsrandes der Sackbohrung 18 mittels eines (nicht ge zeigten) Spreizdornes, der durch eine Bohrung 21 in der Profilwand gegenüber dem Schraubendurchtrittsloch 20 eingeführt wird, kann die Spannschraube 5 gegen Ausdrehen gesichert werden.

Die Spannschraube 5 kann grundsätzlich wie in den Fig. 2, 2a und 3 als in der Profilwand geführte Inbusschraube mit Innensechskant, oder als Handradschraube nach Fig. 4 gestaltet sein.

Wird die Spannschraube 5 nach dem initialen Anstossen des Druckkragens 16 an der Druckschulter 12 weitergedreht, so werden die Spannbolzen 3 unter Oeffnung eines Spaltes 22 zwischen den Spannblockhälften 4.1, 4.2 in feste Anlage mit Kontaktzonen auf der Innenwand der zu koppelnden Säulen- bzw. Verbindungselementenden gedrängt. Sind über die zu koppelnden Enden auch grosse Zugkräfte zu übertragen, so werden die Oberflächen der aus der Stammsäule 1 herausragenden Spannbolzenabschnitte 3.1 zweckmässig mit einer Oberflächenrauhung, z.B. einer Kreuzrändelung oder mit einem Oberflächenbelag versehen.

Wie in Fig. 3 dargestellt, lässt sich die oben anhand eines quadratischen Säulenquerschnittes beschriebene Säulenverlängerungsanordnung auch auf Rundrohrsäulen 1.1 anwenden. Im Hinblick darauf, dass die Sicherung der Parallelität der Spannbolzen 23 nicht durch Profilpartien der zu koppelnden Säulen- bzw. Verbindungselementenden wie z.B. die Eckpartien der Quadratrohrsäulen aufbringbar ist, fällt diese Aufgabe beim Koppeln von Rundrohrsäulen dem Spannblock 24 zu. Als einfachste Lösung bietet sich ein gegenüber der Ausführungsform nach den Fig. 1a und 1b wesentlich, das heisst um etwa den Faktor 2 verlängerter Fangabschnitt mit entsprechend verlängertem Spannblock 24 an. Damit eine gleichmässige Verteilung der Spannbolzen 23 über den Rohrumfang bewirkt werden kann, sind die Spannblockhälften mit Ausrundungen 25 versehbar, in welchen die Fangabschnitte 23.1 einrastbar sind.

Charakteristisch für die Rundrohrankopplung nach Fig. 3 ist, dass das (nicht gezeigte) Verlängerungselement gegenüber der Stammsäule 1.1 in Umfangsrichtung beliebig versetzbar und durch Springen des Klemmblockes 24 in jeder Drehstellung an der Stammsäule fixierbar ist.

Das in Fig. 5 gezeigte Anwendungsbeispiel der erfindungsgemässen Verlängerungsanordnung zeigt vier Stammsäulen 31-34 fit quadratischem Rohrquerschnitt, die in allen vier Säulenwänden Längsschlitze 35 zur Aufnahme von (nicht gezeigten) Auslegerkonsolen enthalten. Eine die Stammsäulen 31-34 an ihren obern Enden miteinander verbindende kreuzförmige Haltevorrichtung 36 ist mit Anschlussstücken 37 versehen, die an den Kreuzarmen der Vorrichtung mit den Stammsäulen fluchtend angebracht sind. Die Anschlussstücke 37 sind im gezeigten Beispiel Rohrabschnitte der gleichen Art wie die Stammsäulen 31 bis 34 und ebenfalls mit Längsschlitzen 35 versehen.

Es ist zweckmässig die Stossstellen 38 zwischen den Stammsäulen 31-34 und den Anschlussstücken 37 der Haltevorrichtung 36 so festzulegen, dass der Teilungsabstand der Schlitze 35 im Bereich dieser Stossstellen beibehalten bleibt. Dadurch lassen sich Ausleger-Konsolen mit im Schlitzteilungsabstand vorhandenen Einhängehaken zumindest in der Spannblock-Trennebene auch im Stossstellenbereich 38 anzubringen.

**Patentansprüche**

1. Anordnung zur Verlängerung von Rohrsäulen, insbesondere mit quadratischem und runden Rohrquerschnitt mit einer eine Stammsäule (1) mit einem Verlängerungselement (6) verbindenden Klemmvorrichtung (2), dadurch gekennzeichnet, dass die Klemmvorrichtung vier in praktisch gleichen Umfangsabständen angeordnete, die Stammsäule (1) und das Verlängerungselement (6) innen-zentrierende längliche Spannbolzen (3) enthält, die sich je etwa zur Hälfte ihrer Länge in der Stammsäule (1) und im Verlängerungselement (6) erstrecken, dass die Spannbolzen (3) an einem, nächst einem Ende der Stammsäule (1) an dieser festgelegten Spannblock (4) in Längsrichtung gelagert sind, und dass der Spannblock (4) aus zwei im wesentlichen gleichgeformten, durch eine Spannschraube (5) auseinanderdrängbare und mit dieser Schraube (5) bewegungsgekuppelte Hälften (4.1, 4.2) besteht.

2. Anordnung nach Anspruch 1, dadurch gekennzeichnet, dass die Spannbolzen (3) im Bereich ihrer Längenmitte einen Fangabschnitt (3.2) aufweisen, in welchem sie am Spannblock (4) in Längsrichtung gehalten sind.

3. Anordnung nach Anspruch 2, dadurch gekennzeichnet, dass die Spannbolzen (3) zylindrische Gestalt besitzen, und der Fangabschnitt (3.2) als zylindrischer Abschnitt mit reduzierten Durchmesser gestaltet ist, der sich mit Spiel über die Länge des Spannblockes (4) erstreckt.

4. Anordnung nach Anspruch 1, dadurch gekennzeichnet, dass die Hälften (4.1, 4.2) des Spannblocks (4) zwei im wesentlichen halbzylindrische symmetrische Körper mit je einer Querbohrung (10, 11) sind, die aufeinander fluchten, wobei die eine Bohrung eine Gewindebohrung (10) und die andere eine Durchgangsbohrung (11) mit einer Druckschulter (12) enthält und beide Bohrungen (1o, 11) für die Aufnahme der Spannschraube (5) gestaltet sind.

5. Anordnung nach Anspruch 4, dadurch gekennzeichnet, dass der Schaft (14) der Spannschraube (5) von der Betätigungsseite her aufeinanderfolgend einen Gewindeabschnitt (15), einen Druckkragen (16) und einen Zapfenabschnitt (17) aufweist, und dass der Zapfenabschnitt mit einer Sacklochbohrung (18) versehen ist, die zur Erstellung eines Ausschraubsicherung (19) bestimmt ist.

6. Anordnung nach Anspruch 4, dadurch gekennzeichnet, dass die halbzylindrischen Körper der Hälften des Spannblockes (24) mit Oberflächen-Ausrundungen (25) als Führungsmittel für den Fangabschnitt (23.1) der Spannbolzem (23) versehen sind (Fig. 3).

7. Anordnung nach einem der Ansprüche 1 bis 3, dadurch gekennzeichnet, dass das eine Ende der Spannbolzen (3) mit einer Nut (8) versehen ist zur Aufnahme eines die vier Spannbolzen federnd umfassenden O-Rings (7), um die bezüglichen Enden der Spannbolzem im ungekuppelten Zustand der Anordnung gegeneinander radial einwärts zu ziehen.

Fig.1b

Fig.1a

Fig.2

Fig.3

Fig. 2 a

Fig. 4

Fig. 5

**Europäisches Patentamt**

**EUROPÄISCHER RECHERCHENBERICHT**

Nummer der Anmeldung

EP  89 81 0080

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | AU-B- 409 764 (INTERNATIONAL HARVESTER CO.) <br> * Anspruch 1; Figuren 1-3 * <br> --- | 1-3,7 | F 16 B  7/04 // <br> F 16 B  41/00 <br> F 16 B  35/04 |
| A | FR-A- 708 055 (A.C. MARSHALL) <br> * Seite 2, Zeilen 43-63; Figuren 1-4 * <br> --- | 1-3 | |
| A | GB-A-2 162 920 (J.R. HALFORD) <br> * Seite 2, Zeilen 75-98; Figuren 4-6 * <br> --- | 1-4 | |
| A | US-A-3 437 362 (A.G. OFFENBROICH) <br> * Spalte 3, Zeile 42 - Spalte 4, Zeile 16; Figuren 4-6 * <br> ----- | 7 | |

RECHERCHIERTE SACHGEBIETE (Int. Cl.4)

F 16 B
A 47 F

Der vorliegende Recherchenbericht wurde für alle Patentansprüche erstellt

| Recherchenort | Abschlußdatum der Recherche | Prüfer |
|---|---|---|
| DEN HAAG | 10-05-1989 | ARESO Y SALINAS J. |